# EUROPEAN PATENT SPECIFICATION

(11) **EP 1 096 387 B1**
(45) Date of publication and mention of the grant of the patent: **10.10.2012**
(21) Application number: 99830674.0
(22) Date of filing: 26.10.1999
(51) Int. Cl.: G06F 13/364

(54) **An arbitration unit for a bus**
Busarbitrierungseinheit
Unité d'arbitrage de bus

(43) Date of publication of application: 02.05.2001
(73) Proprietor: Bull S.A.S., 78340 Les Clayes-sous-Bois (FR)
(72) Inventor: Macchi, Alberto, 20010 Inveruno (Milano) (IT); Bosisio, Giuseppe, 20099 Sesto San Giovanni (Milano) (IT)
(74) Representative: Deambrogi, Edgardo

(56) References cited:
- EP-A- 0 665 501
- US-A- 5 644 733
- US-A- 5 889 972

## Description

The present invention relates to an arbitration unit for a bus.

A bus is a multi-point channel to which various units (agents) are connected in parallel for transmitting information. In general, several agents can operate in master mode, in which they control the exchange of information (transmission or receipt) with a selected agent, which operates in slave mode. Since only one agent at a time can have access to the bus in master mode, it is necessary to provide an arbitration unit which controls mutually exclusive access to the bus.

Each agent which has to access the bus sends a corresponding request to the arbitration unit. The arbitration unit typically assigns access to the bus to one of the requesting agents which is selected by a round-robin policy. In particular, the agents are arranged in a circular list of decreasing priority, starting from a position identified by a round-robin pointer which changes continuously upon each arbitration cycle; the arbitration unit thus grants access to the bus to the first requesting agent which is in a position following that identified by the round-robin pointer (in accordance with a predetermined direction of scanning of the circular list).

The bus generally provides for a retry mechanism, in which the agent which has gained access to the bus receives a retry response as a result of which it releases access to the bus (in order subsequently to repeat the access request) if the selected slave agent is temporarily unavailable to perform the required operations. This avoids the bus being kept busy unnecessarily whilst waiting for the selected slave agent to become available.

A disadvantage of this solution is that it may give rise to a situation in which an individual agent is blocked (starvation). For example, the case may be considered in which all of the agents continuously request access to the bus in order to exchange information with the same slave agent; in this situation, it is possible for one agent always to obtain access to the bus at a moment at which the slave agent is occupied by the other agents so that it continually receives the retry response.

Document US 5 644 733 discloses two partitioned systems interconnected by bus exchange modules which connect to first and second system common buses. Each system common bus shares three or more requestors, and an arbitration logic unit in each partition manages bus access priority depending on certain existing conditions.

Document EP 0 665 501 discloses a bus arbitration circuitry wherein an arbiter allows retried requests to have high priority in subsequent arbitrations.

Document US 5 889 972 discloses a bus bridge deadlock prevention system that detects and resolves a deadlock condition in a bus to bus bridge.

The object of the present invention is to overcome the above-mentioned drawbacks. To achieve this object, an arbitration unit as described in the first claim is proposed.

In short, there is provided an arbitration unit for a bus comprising means for receiving a request for access to the bus from each of a plurality of agents connected to the bus, means for granting access to the bus to one of the requesting agents, the agent which has gained access to the bus releasing access to the bus as a result of a retry response when a resource requested is in an unavailable state, and first scheduling means for selecting one of the requesting agents by a round-robin policy, wherein the arbitration unit includes means for temporarily asserting a high-priority attribute for any agent which has received the retry response on a number of consecutive times greater than a threshold value, and second scheduling means for selecting one of the high-priority requesting agents by a round-robin policy, the granting means granting access to the bus selectively to the agent selected by the first scheduling means or by the second scheduling means.

Moreover, the present invention also proposes a data-processing system comprising the arbitration unit and a corresponding arbitration method.

Further characteristics and the advantages of the arbitration unit according to the present invention will become clear from the following description of a preferred embodiment thereof, given by way of nonlimiting example, with reference to the appended drawings, in which:
Figure 1 is a basic block diagram of a data-processing system in which the arbitration unit of the present invention can be used,
Figure 2 shows the structure of the arbitration unit schematically,
Figure 3 is a simplified state diagram showing the operation of a high-priority control logic of the arbitration unit.

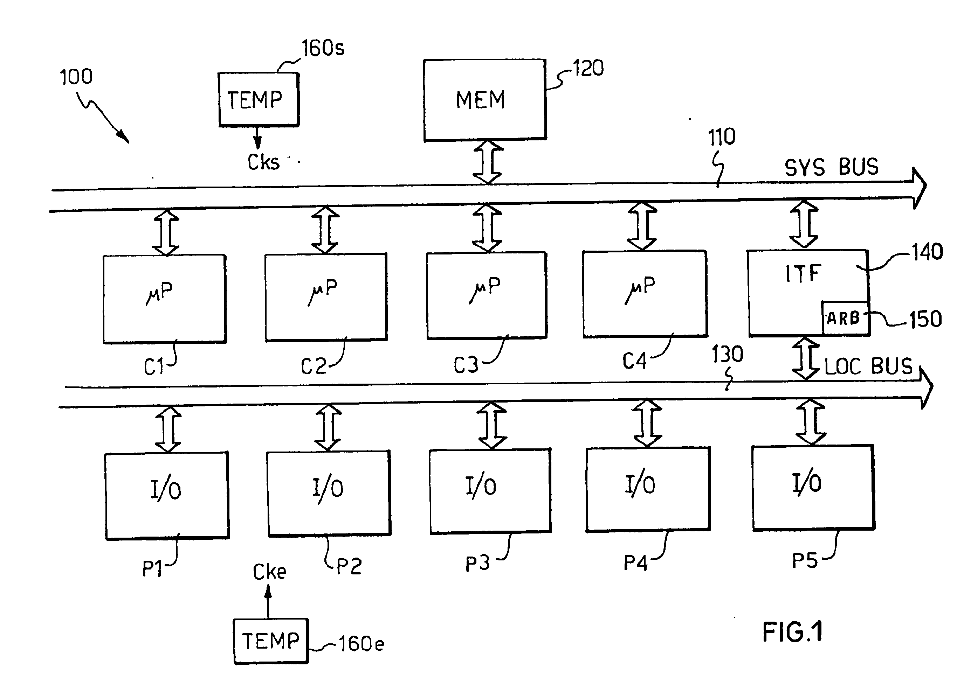

With reference in particular to Figure 1, this shows a data-processing system 100 having an architecture with symmetrical processors. The data-processing system 100 comprises a system bus (SYSBUS) 110 to which are connected in parallel several microprocessors (µp) C1, C2, C3 and C4 (four microprocessors in the embodiment shown) and a main memory (MEM) 120; the main memory 120 is constituted by a DRAM (Dynamic Random Access Memory) with an associated respective control logic which also performs the function of arbitrating mutually exclusive access to the system bus 110.

Several peripheral input/output units (I/O) P1, P2, P3, P4 and P5 (five units in the embodiment shown) are grouped together to form a cluster. The peripheral units P1-P5 are connected to a local bus (LOCBUS) 130, for example, of the PCI (Peripheral Component Interconnect) type. A bridge unit (ITF) 140 operates as an interface between the system bus 110 and the local bus 130; in particular, the bridge unit 140 controls the different communication protocols of the system bus 110 and of the local bus 130, the different timings, and the different data and address formats. Within the bridge unit 140 there is an arbitration logic (ARB) 150 which controls mutually exclusive access to the local bus 130 by the peripheral units P1-P5 and by the bridge unit 140 (agents).

A timing unit (TEMP) 160s generates a periodic clock signal Cks which is supplied to all of the units connected to the system bus 110 (the microprocessors C1-C4, the main memory 120, and the bridge unit 140) in order to synchronise their operation. Similarly, a further timing unit (TEMP) 1601 generates a clock signal Ckl (having a lower frequency than the clock signal Cks) which is supplied to all of the units which are connected to the local bus 130 (the peripheral units P1-P5 and the bridge unit 140).

The local bus 130 has several connection pins which are used for the exchange of signals in accordance with a corresponding communication protocol. In particular, each peripheral unit P1-P5 is connected to the arbitration logic 150 by means of a point to point dedicated line in order to transmit a signal REQi indicative of a request for access to the local bus 130 (in order to use resources of the data-processing system 100); a further access request signal REQi is supplied to the arbitration logic 150 directly within the bridge 140. The index i identifies an expansion slot in which the bridge unit 140 (i=0) or the respective peripheral unit P1-P5 (i=1...5) is housed. Each peripheral unit P1-P5 is also connected to the arbitration logic 150 by means of a point to point dedicated line in order to receive a signal GNTi (where i=1...5) indicative of the granting of mutually exclusive access to the local bus 130; a further access-granting signal GNTi (where i=0) is supplied by the arbitration logic 150 directly into the bridge unit 140.

The arbitration logic 150 is connected by means of a multi-point channel, to all of the peripheral units P1-P5 and directly into the bridge unit 140 in order to receive control signals CMD of a transaction performed on the local bus 130. For example, a signal FRAME indicates the start and the duration of access to the local bus 130, a signal IRDY indicates that the agent which has obtained access to the local bus 130 (the initiator agent) is available to perform a current data phase of the transaction, a signal DEVSEL indicates that the agent selected by the initiator agent (the target agent) has recognised itself as such during an address phase of the transaction, a signal TRDY indicates that the target agent is available to perform the current data phase, a signal STOP indicates that the target agent requires the initiator agent to interrupt the transaction, etc.

The communication protocol of the local bus 130 provides for a retry mechanism in which the initiator agent receives a retry response as a result of which it releases access to the local bus 130 (in order subsequently to repeat the request for access), if the target agent is in an unavailable state and is thus temporarily unable to perform the transaction. For example, the initiator agent may receive the retry response because the target agent is blocked by another agent, has no internal resources available, etc.

For instance, the case may be considered of a writing transaction in which a peripheral unit (such as the peripheral unit P2) has gained access to the local bus 130 in order to write data in DMA (Direct Memory Access) mode onto the main memory 120 (via the bridge unit 140). The peripheral unit P2 asserts the signal FRAME (to indicate the start of the writing transaction) and then asserts the signal IRDY (to indicate that it is available to transmit the data). The bridge unit 140 asserts the signal DEVSEL (to indicate that it has recognised itself as the target of the writing transaction) and then asserts the signal STOP (to request the peripheral unit P2 to interrupt the writing transaction); the signal TRDY is still kept deasserted to indicate that the bridge unit 140 is not available to accept the data, for example, because a writing buffer is completely full. The peripheral unit P2 consequently deasserts the signal FRAME and then deasserts the signal IRDY so as to terminate the writing transaction without any transfer of data. Similarly, in the case of a reading transaction, a peripheral unit which has obtained access to the local bus 130 in order to read data in DMA mode from the main memory 120 (via the bridge unit 140) receives the retry response because the data requested is not present in a cache memory of the bridge unit 140.

These situations differ from those in which the transaction is terminated by the initiator agent when the data has been fully transferred or when access to the bus is revoked by the arbitration logic, when the transaction is aborted by the initiator agent or by the target agent because of an error, or when the transaction is terminated by the target agent owing to a disconnection request (because it is not able to supply or accept further data with the due latency).

Similar considerations apply if the data-processing system has a different architecture (even with a single processor), or has a different number of peripheral units connected to the local bus, if the local bus uses another communication protocol, if a different type of bus is considered, or if the arbitration logic is constituted by a dedicated unit, etc.

In the arbitration logic of the present invention, as described in detail below, a high-priority attribute is associated with each agent. Normally, the high-priority attribute is deasserted (the agent is in a low-priority condition). The high-priority attribute is asserted temporarily (the agent is in a high-priority condition), however, when the agent receives the retry response (without intermediate transactions terminated for other reasons) on a number of consecutive times greater than a threshold value. The arbitration logic 150 then selectively grants access to the local bus 130 to one of the low-priority requesting agents selected by a round-robin policy or to one of the high-priority requesting agents selected by a round-robin policy.

This solution ensures that the high-priority agents gain access to the local bus 130 at a greater frequency than the low-priority agents so that they have a greater probability of finding the requested resources available. The arbitration unit of the present invention thus drastically reduces the risk of starvation of the agents.

This result is achieved extremely simply; this permits the use of a very rapid structure which does not overload the arbitration unit in any way.

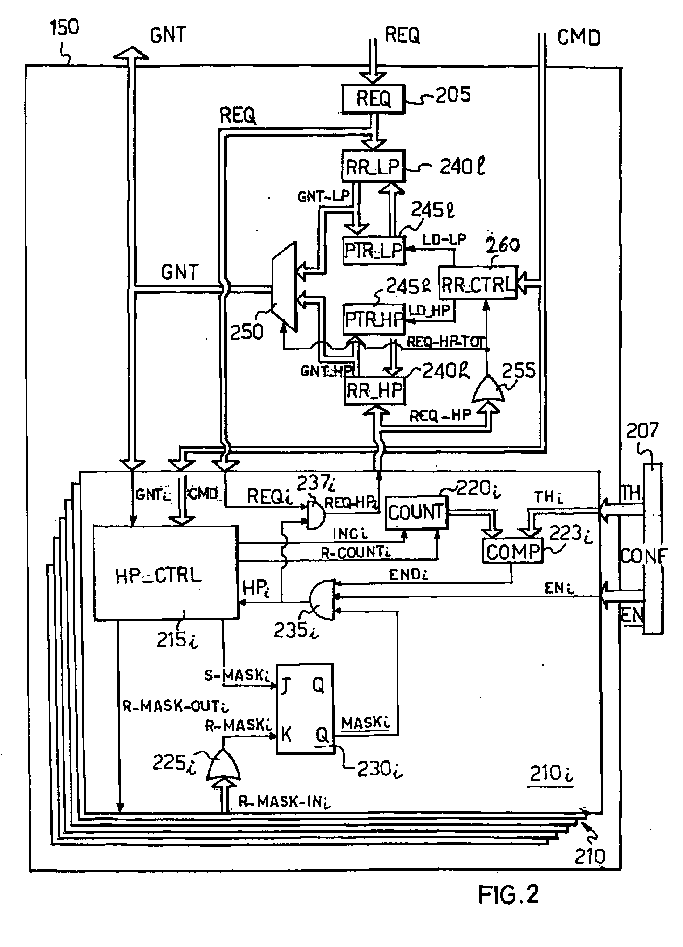

With reference now to Figure 2, the arbitration logic 150 receives as inputs the access-request signals REQi (collectively indicated REQ) and the control signals CMD, and outputs the access-granting signals GNTi (collectively indicated GNT). The access-request signals REQ are latched in an input buffer 205. A bank of configuration registers (CONF) 207 of the bridge unit supplies, for each agent, a signal THi, representative of a threshold value, and an enabling signal ENi; the threshold signals THi (collectively indicated TH) and the enabling signals ENi (collectively indicated EN) are received as inputs by the arbitration logic 150.

The arbitration logic 150 includes a bank of high-priority blocks 210 (6 in the embodiment in question) each of which is associated with an agent. In particular, a generic high-priority block 210i (associated with the i-th agent) comprises a high-priority control logic (HP_CTRL) 215i, constituted basically by a state machine. The high-priority control logic 215i receives as inputs the control signals CMD and the access-granting signal GNTi.

The high-priority control logic 215i generates an increment signal INCi and a reset signal R_COUNTi which are supplied as inputs to a counter (COUNT) 220i. The value contained in the counter 220i and the threshold value THi are supplied to corresponding inputs of a comparator (COMP) 223i; the comparator 223i outputs an end-of-count signal ENDi indicative of the fact that the content of the counter 220i has reached the threshold value THi.

The high-priority logic control unit 215i also generates a self-masking deactivation signal R_MASK_OUTi which is supplied to all of the other high-priority blocks of the bank 210. The self-masking deactivation signals received by the other high-priority blocks of the bank 210 (collectively indicated R_MASK_INi) are supplied to corresponding inputs of an OR logic gate 225i. The high-priority block 210i also includes a flip-flop 230i having a set input J, a reset input K, a main output Q and a secondary output Q. The input J receives a self-masking activation signal S_MASKi generated by the high-priority control logic 215i, whereas the input K receives a self-masking deactivation signal R_MASKi generated by the OR logic gate 225i.

The end-of-count signal ENDi, the enabling signal ENi and a self-masking signal MASKi generated by the output Q of the flip-flop 230i are supplied to corresponding inputs of an AND logic gate 235i. The self-masking signal MASKi is underlined to indicate that (unlike the other signals) it is at a logic level 0 when asserted and at a logic level 1 when deasserted. The AND logic gate 235i generates a signal HPi indicative of a high-priority attribute of the i-th agent which is supplied as an input to the high-priority control logic 215i. The high-priority signal HPi and the access request signal REQi are supplied to corresponding inputs of a further AND logic gate 237i. The AND logic gate 237i generates a high-priority access request signal REQ_HPi which is supplied outside the high-priority block 210i.

The access-request signals REQ (latched in the input buffer 205) are also supplied as inputs to a low-priority round-robin logic (RR_LP) 240l, constituted, for example, by a plurality of fixed-priority combinatorial networks connected to a multiplexer; associated with the round-robin logic 240l is a register 245l in which a corresponding low-priority round-robin pointer PTR_LP is stored. The round-robin pointer PTR_LP is supplied as an input to the round-robin logic 240l which generates a low-priority access-granting signal GNT_LPi for each agent; the access-granting signals GNT_LPi (collectively indicated GNT_LP) are supplied as inputs to the register 245l.

Similarly, the access-request signals REQ_HPi generated by each high-priority block of the bank 210 (collectively indicated REQ_HP) are supplied as inputs to a high-priority round-robin logic (RR_HP) 240h, with which is associated a register 245h wherein a corresponding high-priority round-robin pointer PTR_HP is stored. The round-robin pointer PTR_HP is supplied as an input to the round-robin logic 240h which generates a high-priority access-granting signal GNT_HPi for each agent; the granting signals GNT_HPi (collectively indicated GNT_HP) are supplied as inputs to the register 245h.

The access-granting signals GNT_LP and the access-granting signals GNT_HP are supplied to corresponding data inputs of a multiplexer 250 which outputs the access-granting signals GNT. The access-request signals REQ HP are also supplied to corresponding inputs of an OR logic gate 255; the OR logic gate 255 generates a total high-priority access request signal REQ_HP_TOT which is supplied to a control input of the multiplexer 250.

A round-robin control logic (RR_CTRL) 260 receives as inputs the control signals CMD and the total high-priority access-request signal REQ_HP_TOT. The round-robin control logic 260 generates two loading signals LD_LP and LD_HP which are supplied to the register 245l and to the register 245h, respectively.

The round-robin logic 240l selects one of the agents which has requested access to the local bus (access-request signal REQi asserted). In particular, the agents are arranged in a circular list defined by the corresponding indices with the last agent (i=5) followed by the first agent (i=0); the round-robin logic 240l asserts the access-granting signal GNT_LPi associated with the first requesting agent which is in a position following that identified by the round-robin pointer PTR_LP, in accordance with an increasing wrap-around sequence.

Similarly, the round-robin logic 240h selects one of the high-priority requesting agents (access request signal REQ_HPi asserted); in particular, the round-robin logic 240h asserts the access-granting signal GNT_HPi associated with the first high-priority requesting agent which is in a position following that identified by the round-robin pointer PTR_HP, in accordance with a decreasing wrap-around sequence.

At the same time, if at least one of the access-request signals REQ_HP is asserted, the OR logic gate 255 asserts the total high-priority access request signal REQ_HP_TOT. For each arbitration cycle, if the total high-priority access-request signal REQ_HP_TOT is asserted, the multiplexer 250 transfers the access-granting signals GNT_HP to its own output (so as to grant access to the local bus to the requesting agent selected by the round-robin logic 240h); at the same time, the round-robin control logic 260 asserts the loading signal LD_HP, so as to update the round-robin pointer PTR_HP to the value which identifies the agent selected. In the opposite case, the multiplexer 250 transfers the access-granting signals GNT_LP to its own output (so as to grant access to the local bus to the agent selected by the round-robin logic 2401); at the same time, the round-robin control logic 260 asserts the loading signal LD_LP so as to update the round-robin pointer PTR_LP.

In the above-described structure, each high-priority requesting agent can be selected either by the round-robin logic 240l or by the round-robin logic 240h; moreover, access to the local bus is granted to the requesting agent selected by the round-robin logic 240l only when there is no high-priority requesting agent.

This solution ensures that every high-priority requesting agent gains access to the local bus at an extremely high frequency. In particular, if the writing buffer of the bridge unit has a fairly large depth, it is very probable that at most only one high-priority requesting agent will be present; in this situation, the single high-priority requesting agent can gain access to the local bus even several times in succession, since it can be selected either by the round-robin logic 240h (the single high-priority requesting agent) or by the round-robin logic 240l.

Moreover, the fact that the circular lists controlled by the round-robin logic 240l and by the round-robin logic 240h are scanned on the basis of two opposite directions of scanning (increasing and decreasing, respectively) prevents beating phenomena, further reducing the possibility of starvation of the agents.

Similar considerations apply if the round-robin logic (low-priority and high-priority) is implemented differently and if the round-robin pointer is updated by a criterion other than the skipping criterion described above, for example, by a pseudo-random or preset-increment criterion (a conventional round-robin) or, more generally, if other equivalent scheduling means are provided, if the circular lists are scanned in a different manner, etc. Alternatively, each high-priority requesting agent may be selected solely by the round-robin logic 240h (with the corresponding access-request signal REQi masked for the round-robin logic 240l), access to the local bus may be granted by alternating the agents selected by the round-robin logic 240l and by the round-robin logic 240h in a different manner (for example, by granting access to the local bus on two consecutive occasions to the agent selected by the round-robin logic 240h), or the circular lists may be scanned in the same direction.

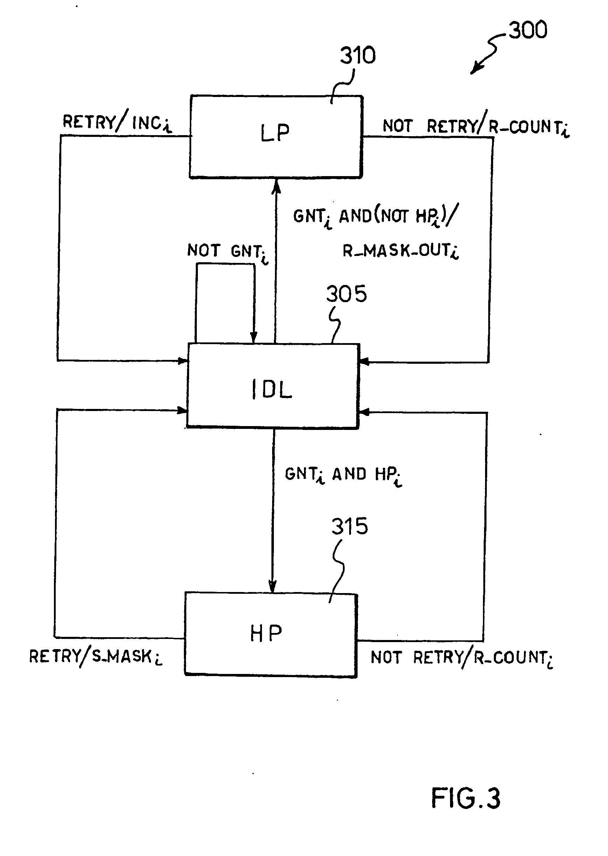

In order to describe the operation of the high-priority block 210i, Figure 2 is considered in combination with Figure 3 which shows a simplified state diagram 300 of the high-priority control logic 215i which progresses between various stable states upon each clock signal Ckl (not shown in the drawings for simplicity of illustration).

In an initial condition (in response to a reset signal), the high-priority control logic 215i is brought to an inactive state (IDL) 305. At the same time, the flip-flop 230i is brought to a reset state so that the self-masking signal MASKi generated by the output Q is deasserted (logic level 1). The counter 220i is reset; the content of the counter 220i is less than the threshold value THi so that the end-of-count signal ENDi generated by the comparator 223i is deasserted. The signal HPi is thus deasserted and the i-th agent is therefore in the low-priority condition. The round-robin pointer PTR_LP (stored in the register 2451) and the round-robin pointer PTR_HP (stored in the register 245h) are set at a default value (for example 0). Upon each clock signal Ckl in which the i-th agent does not gain access to the local bus, indicated by the condition NOT GNTi, the high-priority control logic 215i remains in the inactive state 305.

As soon as the i-th agent (in the low-priority condition) gains access to the local bus, indicated by the condition GNTi AND (NOT HPi), the high-priority control logic 215i changes to the state 310 (LP) and simultaneously asserts the self-masking deactivation signal R_MASK_OUTi (which is supplied to the other high-priority blocks of the bank 210).

If the i-th agent receives the retry response, indicated generically by the condition RETRY, the high-priority control logic 215i returns to the inactive state 305 and at the same time asserts the increment signal INCi. If, on the other hand, the i-th agent does not receive the retry response, indicated by the condition NOT RETRY, the high-priority control logic 215i returns to the inactive state 305 and simultaneously asserts the reset signal R_COUNTi. The counter 220i is thus incremented upon each retry response and is reset upon each non-retry response, so that the content of the counter 220i represents the number of consecutive retry responses for the i-th agent.

This situation is maintained as long as the content of the counter 220i is below the threshold value THi. As soon as the content of the counter 220i reaches the threshold value THi, the end-of-count signal ENDi generated by the comparator 223i is asserted. In this situation (upon the assumption that the enabling signal ENi is asserted) the signal HPi is asserted so that the i-th agent is brought to the high-priority condition. As soon as the i-th agent gains access to the local bus again, indicated by the condition GNTi AND HPi, the high-priority control logic 215i changes to the state 315 (HP).

If the i-th agent receives the retry response (condition RETRY) the high-priority control logic 215i returns to the inactive state 305 and simultaneously asserts the self-masking activation signal S_MASKi; the self-masking signal MASKi generated by the output Q is consequently asserted (logic level 0) so that the high-priority signal HPi is deasserted. If, on the other hand, the i-th agent does not receive the retry response (condition NOT RETRY), the high-priority control logic 215i returns to the inactive state 305 and simultaneously asserts the reset signal R_COUNTi, so that the end-of-count signal ENDi, and hence also the high-priority signal HPi, are deasserted.

In the structure described above, the high-priority attribute of each agent is deasserted (by means of the signal R_COUNTi) as soon as the agent has gained access to the local bus without receiving the retry response, so that the other agents are penalised as little as possible.

Moreover, the high-priority attribute is temporarily deasserted (by means of the self-masking signal MASKi) if the agent has received a further retry response after having changed to the high-priority condition; this situation is maintained as long as access to the local bus is granted to another low-priority requesting agent, which asserts one of the self-masking deactivation signals R_MASK_INi, so that the signal R_MASKi is also asserted and returns the flip-flop 230i to the reset condition (self-masking signal MASKi deasserted). This implements a mechanism for temporary masking of the high-priority attribute (self-masking) which prevents access to the local bus unnecessarily being granted to a high-priority agent when the resources requested are not available.

Similar considerations apply if a different self-masking mechanism is provided, if the low-priority block has a different structure, if the high-priority attribute of each agent is deasserted only when the data has been fully transferred (and not when the transaction is terminated for another reason, such as, for example, an error), etc. The arbitration logic of the present invention may, however, also be implemented without any self-masking mechanism.

The enabling signal ENi (when deasserted) keeps the i-th agent always in the low-priority condition (high-priority signal HPi deasserted), irrespective of the value of the end-of-count signal ENDi. This enables the high-priority block 210i to be activated selectively for each agent; for example, it is possible for the high-priority block 210i to be activated only for the agents which are slow and are therefore more prone to a starvation situation.

The threshold value THi generally has a fairly high value (for example, between 100 and 300, although a different value is not excluded) to ensure optimal operation of the arbitration logic 150. The above-described structure also enables the threshold value THi to be set individually for each agent; this feature is particularly advantageous since it enables the threshold value to be adapted to the actual speed of the agent.

The arbitration logic of the present invention may, however, also be implemented without any enabling signal and with the threshold values preset and equal for all of the agents.

Naturally, in order to satisfy contingent and specific requirements, an expert in the art may apply to the above-described arbitration unit many modifications and variations all of which, however, are included within the scope of protection of the invention as defined by the following claims.

## Claims

1. An arbitration unit (150) for a bus (130) comprising means (205) for receiving a request for access to the bus (130) from each of a plurality of agents (140, P1-P5) connected to the bus (130), means (240-260) for granting access to the bus (130) to one of the requesting agents, the agent which has gained access to the bus (130) releasing access to the bus (130) as a result of a retry response when a resource requested is in an unavailable state, and first scheduling means (240l, 245l) for selecting one of the requesting agents by a round-robin policy,
**characterised in that**
the first scheduling means (2401, 2451) are low-priority scheduling means, and **in that** it includes means (210) for temporarily asserting a high-priority attribute for any agent (140, P1-P5) which has received the retry response on a number of consecutive times greater than a threshold value, and second high-priority scheduling means (240h, 245h) for selecting one of the high-priority requesting agents by a round-robin policy, the granting means (240-260) granting access to the bus (130) selectively to the agent selected by the first low-priority scheduling means (240l, 245l) or by the second high-priority scheduling means (240h, 245h) wherein the granting means (240-260) grant access to the bus (130) to the agent selected by the first low-priority scheduling means (240l, 245l) only when there is no high-priority requesting agent.

2. An arbitration unit (150) according to Claim 1, wherein the means for temporarily asserting the high-priority attribute (210) deassert the high-priority attribute of the agent when the agent has gained access to the bus (130) without receiving the retry response.

3. An arbitration unit (150) according to Claim 2, further comprising, for each agent (140, P1-P5), means (215i, 230i, 235i) for temporarily deasserting the high-priority attribute of the agent when the agent selected by the second high-priority scheduling means (240h, 245h) has gained access to the bus (130) and has received a retry response after having changed to the high-priority condition.

4. An arbitration unit (150) according to Claim 3, further comprising, for each agent (140, P1-P5), means (215i, 225i, 230i) for deactivating the temporary masking means (215i, 225i, 230i) of the other agents when the agent selected by the first low-priority scheduling means (240l-245l) has gained access to the bus.

5. An arbitration unit (150) according to any one of Claims 1 to 4, further comprising means (235i) for selectively activating the means for temporarily asserting the high-priority attribute (210) for each agent (140, P1-P5).

6. An arbitration unit (150) according to any one of Claims 1 to 5, further comprising means (207) for setting the threshold value for each agent (140, P1-P5) independently.

7. An arbitration unit (150) according to any one of Claims 1 to 6, wherein the first low-priority scheduling means (240l-245l) and the second high-priority scheduling means (240h-245h) arrange the agents (140, P1-P5) in a circular list, the first low-priority scheduling means (240l-245l) selecting the requesting agent on the basis of a first direction of scanning of the circular list and the second high-priority scheduling means (240h-245h) selecting the high-priority requesting agent on the basis of a second direction of scanning of the circular list, opposite to the first direction of scanning.

8. A data-processing system (100) comprising a bus (130), a plurality of agents (140, P1-P5) connected to the bus (130), and the arbitration unit (150) for the bus (130) according to any one of Claims 1 to 7.

9. An arbitration method for a bus (130) comprising the steps of:
a) receiving a request for access to the bus (130) from each of a plurality of agents (140, P1-P5) connected to the bus (130),
b) granting access to the bus (130) to one of the requesting agents, the agent which has gained access to the bus (130) releasing access to the bus (130) as a result of a retry response when a resource requested is in an unavailable state,
**characterised by** the step of:
c) temporarily asserting a high-priority attribute for each agent (140, P1-P5) which has received the retry response on a number of consecutive times greater than a threshold value, step b) consisting in granting access to the bus (130) selectively to one of the requesting agents selected by a round-robin policy, or to one of the high-priority requesting agents selected by a round-robin policy.

## Patentansprüche

1. Eine Arbitrations-Einheit (150) für einen Bus (130), aufweisend
- Mittel (205) zum Empfangen einer Anfrage zum Zugriff auf den Bus (130) von jedem einer Vielzahl von mit dem Bus (130) verbundenen Agenten (140, P1-P5),
- Mittel (240-260) zur Gewährung des Zugriffs auf den Bus (130) zu einem der Anfrageagenten, wobei der Agent, der Zugriff auf den Bus (130) erlangt hat, den Zugriff auf den Bus (130) freigibt als Folge einer Wiederholungs-Rückmeldung, wenn eine angefragte Ressource in einem nicht verfügbaren Zustand ist, und
- erste Zeitplanungsmittel (240l, 245l) zur Auswahl eines der Anfrageagenten mittels eines Umlaufverfahrens,
**dadurch gekennzeichnet, dass**
- die ersten Zeitplanungsmittel (240l, 245l) Zeitplanungsmittel mit niedriger Priorität sind, und
- dass es Mittel (210) zum temporären Durchsetzen hoher Prioritätseigenschaften für jeden Agenten (140, P1-P5) einschließt, welcher die Wiederholungs-Rückmeldung in einer Anzahl von aufeinanderfolgenden Malen empfangen hat, die größer als ein Grenzwert ist, und
- zweite Zeitplanungsmittel hoher Prioritätseigenschaften (240h, 245h) zur Auswahl eines der Anfrageagenten mit hoher Priorität mittels eines Umlaufverfahrens, wobei
- die Gewährungsmittel (240-260) selektiven Zugriff auf den Bus (130) gewähren entsprechend dem durch die ersten Zeitplanungsmittel niedriger Priorität (240l, 245l) ausgewählten Agenten oder durch die zweiten Zeitplanungsmittel hoher Priorität (240h, 245h), wobei
- die Gewährungsmittel (240-260) Zugriff auf den Bus (130) und den durch die ersten Zeitplanungsmittel niedriger Priorität (240l, 245l) ausgewählten Agenten nur dann gewähren, wenn es keine Anfrageagenten mit hoher Priorität gibt.

2. Eine Arbitrations-Einheit (150) gemäß Anspruch 1, wobei die Mittel zum temporären Zulassen der hohen Prioritätseigenschaften (210) die hohen Prioritätseigenschaften des Agenten nicht zulassen, wenn der Agent Zugriff auf den Bus (130) erhalten hat, ohne die Wiederholungs-Rückmeldung zu empfangen.

3. Eine Arbitrations-Einheit (150) gemäß Anspruch 2, weiterhin aufweisend, für jeden Agenten (140, P1-P5), Mittel (215i, 230i, 235i) zum temporären Unterdrücken der hohen Prioritätseigenschaften des Agenten, wenn der durch die zweiten Zeitplanungsmittel hoher Priorität (240h, 245h) ausgewählte Agent Zugriff auf den Bus (130) erlangt und eine Wiederholungs-Rückmeldung empfangen hat, nachdem er in den hohen Prioritätszustand gewechselt hat.

4. Eine Arbitrations-Einheit (150) gemäß Anspruch 3, weiterhin aufweisend, für jeden Agenten (140, P1-P5), Mittel (215i, 225i, 230i) zur Deaktivierung der temporären Maskierungsmittel (215i, 225i, 230i) der anderen Agenten, wenn der durch die ersten Zeitplanungsmittel niedriger Priorität (240l, 245l) ausgewählte Agent Zugriff auf den Bus erlangt hat.

5. Eine Arbitrations-Einheit (150) gemäß einem der Ansprüche 1 bis 4, weiterhin aufweisend Mittel (235i) zum selektiven Aktivieren der Mittel zum temporären Zulassen der hohen Prioritätseigenschaften (210) für jeden Agenten (140, P1-P5).

6. Eine Arbitrations-Einheit (150) gemäß einem der Ansprüche 1 bis 5, weiterhin aufweisend Mittel (207) zum unabhängigen Einstellen des Grenzwertes für jeden Agenten (140, P1-P5).

7. Eine Arbitrations-Einheit (150) gemäß einem der Ansprüche 1 bis 6, wobei die ersten Zeitplanungsmittel niedriger Priorität (240l, 245l) und die zweiten Zeitplanungsmittel hoher Priorität (240h, 245h) die Agenten (140, P1-P5) in einer Umlaufliste anordnen, wobei die ersten Zeitplanungsmittel niedriger Priorität (240l, 245l) den Anfrageagenten auf Grund einer ersten Abfragerichtung der Umlaufliste auswählen und die zweiten Zeitplanungsmittel hoher Priorität (240h, 245h) den Anfrageagenten mit hoher Priorität auf Grund einer zweiten Abfragerichtung der Umlaufliste auswählen, die der ersten Abfragerichtung entgegengesetzt ist.

8. Ein Datenverarbeitungssystem (100) aufweisend einen Bus (130), eine Vielzahl von Agenten (140, P1-P5), die mit dem Bus (130) verbunden sind, und der Arbitrations-Einheit (150) für den Bus (130) gemäß einem der Ansprüche 1 bis 7.

9. Ein Arbitrations-Verfahren für einen Bus (130), aufweisend die folgenden Schritte:
a) Empfangen einer Anfrage zum Zugriff auf den Bus (130) von jedem einer Vielzahl von mit dem Bus (130) verbundener Agenten (140, P1-P5),
b) Gewähren des Zugriffs auf den Bus (130) zu einem der Anfrageagenten, wobei der Agent, der Zugriff auf den Bus (130) erlangt hat, den Zugriff auf den Bus (130) freigibt als Folge einer Wiederholungs-Rückmeldung, wenn eine angefragte Ressource in einem nicht verfügbaren Zustand ist,
**gekennzeichnet durch** den Schritt:
c) temporäres Zulassen hoher Prioritätseigenschaften für jeden Agenten (140, P1-P5), welcher die Wiederholungs-Rückmeldung in einer Anzahl von aufeinanderfolgenden Malen empfangen hat, die größer als ein Grenzwert ist, wobei Schritt b) darin besteht, dass der Zugriff auf den Bus (130) wahlweise zu einem der mittels eines Umlaufverfahrens ausgewählten Anfrageagenten, oder zu einem der mittels eines Umlaufverfahrens ausgewählten Anfrageagenten hoher Priorität gewährt wird.

## Revendications

1. Unité d'arbitrage (150) pour un bus (130) comprenant des moyens (205) destinés à recevoir une demande d'accès au bus (130) à partir de chacun d'une pluralité d'agents (140, P1-P5) connectés au bus (130), des moyens (240-260) pour octroyer l'accès au bus (130) à l'un des agents demandeurs, l'agent ayant obtenu l'accès au bus (130) libérant l'accès au bus (130) à la suite d'une réponse de nouvelle tentative lorsqu'une ressource demandée présente un état non disponible, et des premiers moyens de planification (2401, 2451) pour sélectionner l'un des agents demandeurs par le biais d'une règle de permutation circulaire,
**caractérisée en ce que**
les premiers moyens de planification (2401, 2451) sont des moyens de planification de priorités faibles, et **en ce que** l'unité comporte des moyens (210) pour affirmer temporairement un attribut à priorité élevée pour tout agent (140, P1-P5) ayant reçu la réponse de nouvelle tentative sur un nombre d'occurrences consécutives supérieur à une valeur seuil, et des seconds moyens de planification de priorités élevées (240h, 245h) pour sélectionner l'un des agents demandeurs à priorité élevée par le biais d'une règle de permutation circulaire, les moyens d'octroi (240-260) octroyant l'accès au bus (130), de manière sélective, à l'agent sélectionné par les premiers moyens de planification de priorités faibles (2401, 2451) ou par les seconds moyens de planification de priorités élevées (240h, 245h), dans laquelle les moyens d'octroi (240-260) octroient l'accès au bus (130) à l'agent sélectionné par les premiers moyens de planification de priorités faibles (2401, 2451) uniquement lorsqu'il n'existe pas d'agent demandeur à priorité élevée.

2. Unité d'arbitrage (150) selon la revendication 1, dans laquelle les moyens pour affirmer temporairement l'attribut à priorité élevée (210) infirment l'attribut à priorité élevée de l'agent lorsque l'agent a obtenu l'accès au bus (130) sans recevoir la réponse de nouvelle tentative.

3. Unité d'arbitrage (150) selon la revendication 2, comprenant en outre, pour chaque agent (140, P1-P5), des moyens (215i, 230i, 235i) pour infirmer temporairement l'attribut à priorité élevée de l'agent lorsque l'agent sélectionné par les seconds moyens de planification de priorités élevées (240h, 245h) a obtenu l'accès au bus (130) et a reçu une réponse de nouvelle tentative après être passé à l'état à priorité élevée.

4. Unité d'arbitrage (150) selon la revendication 3, comprenant en outre, pour chaque agent (140, P1-P5), des moyens (215i, 225i, 230i) pour désactiver les moyens de masquage temporaires (215i, 225i, 230i) des autres agents lorsque l'agent sélectionné par les premiers moyens de planification de priorités faibles (2401-2451) a obtenu l'accès au bus.

5. Unité d'arbitrage (150) selon l'une quelconque des revendications 1 à 4, comprenant en outre des moyens (235i) pour activer de manière sélective les moyens pour affirmer temporairement l'attribut à priorité élevée (210) pour chaque agent (140, P1-P5).

6. Unité d'arbitrage (150) selon l'une quelconque des revendications 1 à 5, comprenant en outre des moyens (207) pour régler la valeur seuil pour chaque agent (140, P1-P5) indépendamment.

7. Unité d'arbitrage (150) selon l'une quelconque des revendications 1 à 6, dans laquelle les premiers moyens de planification de priorités faibles (2401-2451) et les seconds moyens de planification de priorités élevées (240h-245h) agencent les agents (140, P1-P5) dans une liste circulaire, les premiers moyens de planification de priorités faibles (2401-2451) sélectionnant l'agent demandeur sur la base d'une première direction de balayage de la liste circulaire et les seconds moyens de planification de priorités élevées (240h-245h) sélectionnant l'agent demandeur à priorité élevée sur la base d'une seconde direction de balayage de la liste circulaire, opposée à la première direction de balayage.

8. Système de traitement de données (100) comprenant un bus (130), une pluralité d'agents (140, P1-P5) connectés au bus (130), et l'unité d'arbitrage (150) pour le bus (130) selon l'une quelconque des revendications 1 à 7.

9. Procédé d'arbitrage pour un bus (130), comprenant les étapes ci-dessous consistant à :
a) recevoir une demande d'accès au bus (130) à partir de chacun d'une pluralité d'agents (140, P1-P5) connectés au bus (130) ;
b) octroyer l'accès au bus (130) à l'un des agents demandeurs, l'agent ayant obtenu l'accès au bus (130) libérant l'accès au bus (130) à la suite d'une réponse de nouvelle tentative lorsqu'une ressource demandée présente un état non disponible,
**caractérisé par** l'étape consistant à :
c) affirmer temporairement un attribut à priorité élevée pour chaque agent (140, P1-P5) ayant reçu la réponse de nouvelle tentative sur un nombre d'occurrences consécutives supérieur à une valeur seuil, l'étape b) consistant à octroyer l'accès au bus (130), de manière sélective, à l'un des agents demandeurs sélectionné par une règle de permutation circulaire, ou à l'un des agents demandeurs à priorité élevée sélectionné par une règle de permutation circulaire.
